# EUROPEAN PATENT SPECIFICATION

(11) **EP 0 949 698 B1**
(45) Date of publication and mention of the grant of the patent: **22.07.2009**
(21) Application number: 99400839.9
(22) Date of filing: 06.04.1999
(51) Int. Cl.: H01M 10/46, H01M 2/30, H01M 2/10

(54) **Battery pack, battery charger and electronic equipment using battery pack**
Batteriesatz, Batterieladegerät und elektronisches Gerät für den Gebrauch mit dem Batteriesatz
Bloc de batteries, chargeur de batterie et équipement électronique employant le bloc de batteries

(30) Priority: 06.04.1998 JP 9307498
(43) Date of publication of application: 13.10.1999
(73) Proprietor: Sony Corporation, Tokyo (JP)
(72) Inventor: Takeshita, Toshio c/o Sony Corporation, Shinagawa-ku Tokyo (JP); Kubotera, Tomoyuki c/o Sony Corporation, Shinagawa-ku Tokyo (JP); Koyama, Toshio c/o Sony Corporation, Shinagawa-ku Tokyo (JP); Aoki, Hisashi c/o Sony Kohda Corporation, Nukata-gun Aichi-ken (JP)
(74) Representative: Thévenet, Jean-Bruno

(56) References cited:
- EP-A- 0 470 754
- EP-A- 0 767 819
- DE-A- 3 625 135
- GB-A- 2 239 567
- US-A- 4 227 140
- US-A- 5 162 719
- US-A- 5 248 927
- US-A- 5 262 710

## Description

### BACKGROUND OF THE INVENTION

### Field of the Invention:

The present invention relates to a battery pack, a battery charger, and an electronic equipment using the battery pack, and more particularly to plural kinds of battery packs having an optional number of battery cells built therein, a battery charger capable of charging the battery packs, and an electronic equipment capable of using the battery packs.

### Description of the Related Art:

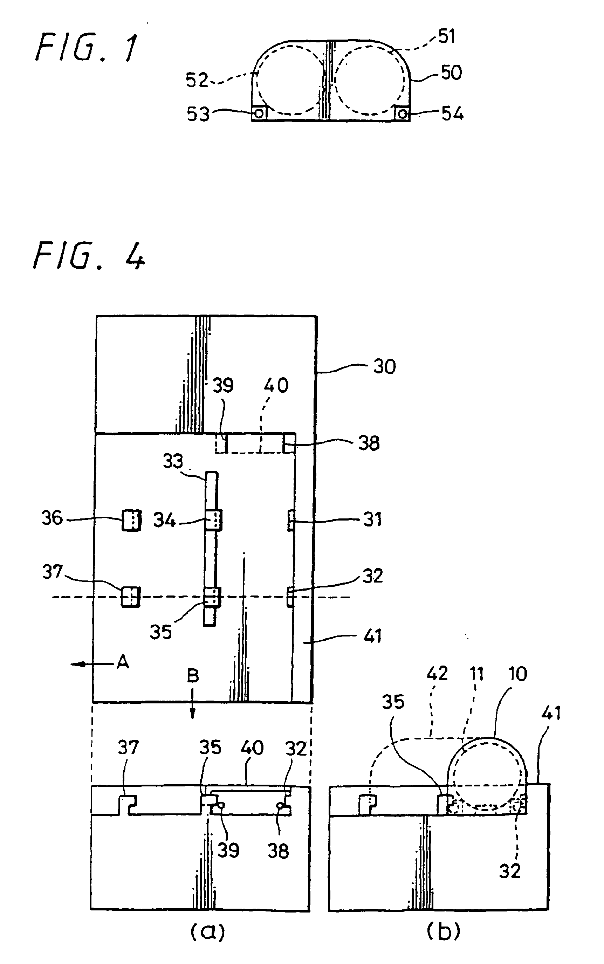

FIG. 1 is a side view showing the structure of a battery pack according to the prior art. For example, a conventional battery pack 50 has two battery cells 51 and 52 built therein, and positive electrode and negative electrode terminals 53 and 54 have been positioned on both ends of a side face. In a battery charger for charging the battery pack and an electronic equipment using the battery pack, for example, a video camera with a built-in recorder, a video light and the like, only the battery pack has been engaged. In a high capacity type battery pack, cells have been overlapped in the thickness direction, for example, to obtain a high capacity so that the high capacity type battery pack could be engaged with the battery charger and the electronic equipment.

In the conventional battery pack, with the battery charger to which the pack is fixed and the electronic equipment described above, only the battery pack having at least a bottom face taking the same shape can be fixed and used. Therefore, there has been a problem that the shape and capacity of the pack have neither flexibility nor expandability.

### SUMMARY OF THE INVENTION

It is an object of the present invention to solve the above-mentioned problems of the prior art and to provide plural kinds of battery packs having an optional number of battery cells built therein, a battery charger capable of charging the battery packs and an electronic equipment capable of using the battery packs.

According to an aspect of the present invention, there is provided a battery pack having at least two battery cells of the same width accommodated therein which is capable of being charged by a battery charger described below, the battery pack comprising: a bottom region including a first electrode terminal positioned near a side face of the battery pack and a second electrode terminal positioned away from the side face of the battery pack, said first and second electrode terminals being positive and negative terminal electrodes capable of electrically contacting the battery charger during charging; a space between a centre of the first electrode terminal and a centre of the second electrode terminal is less than a width of one of the battery cells and wherein a communication terminal for detecting the residual charging amount of the battery pack is provided in said space; concave engaging portions capable of engaging the battery pack with the battery fixing plane of the battery charger; and a channel provided in the bottom region of the battery pack adjacent to the second electrode terminal for properly positioning the battery pack in the battery charger.

Moreover, the present invention provides an electronic apparatus using the battery pack.

Furthermore, a battery charger using a battery pack comprises: a battery pack fixing plane capable of fixing a battery pack having at least two cells of the same width built in parallel; an engaging means for engaging a battery pack having at least one cell built therein with the battery pack fixing plane; and a connecting means adapted for connection to positive electrode and negative electrode terminals of the battery pack, the connecting means being disposed to connect to positive electrode and negative electrode terminals having centres separated by a space less than a width of one of the battery cells; wherein at least one side of the battery pack fixing face is opened in the widthwise direction of said face.

According to the present invention, the terminal shape of each of the battery packs having different bottom shapes is unified to the terminal shape of the battery pack having minimum unit structure, and the battery pack having an optional bottom shape can be engaged with the shape on the apparatus side. In the electronic equipment, therefore, battery packs having various shapes and capacities can be used.

### BRIEF DESCRIPTION OF THE DRAWINGS

FIG. 1 is a side view showing the structure of a battery pack according to the prior art;
FIG. 2 is a block diagram showing the structure of a battery pack to which the present invention is applied;
FIG. 3a to FIG. 3e are block diagrams showing the structure of other battery packs to which the present invention is applied; and
FIG. 4a and FIG. 4b are a front view showing the structure of the face of an equipment to which the battery pack is to be fixed according to the present invention, and a sectional view along the dotted line portion.

### DESCRIPTION OF THE PREFERRED EMBODIMENTS

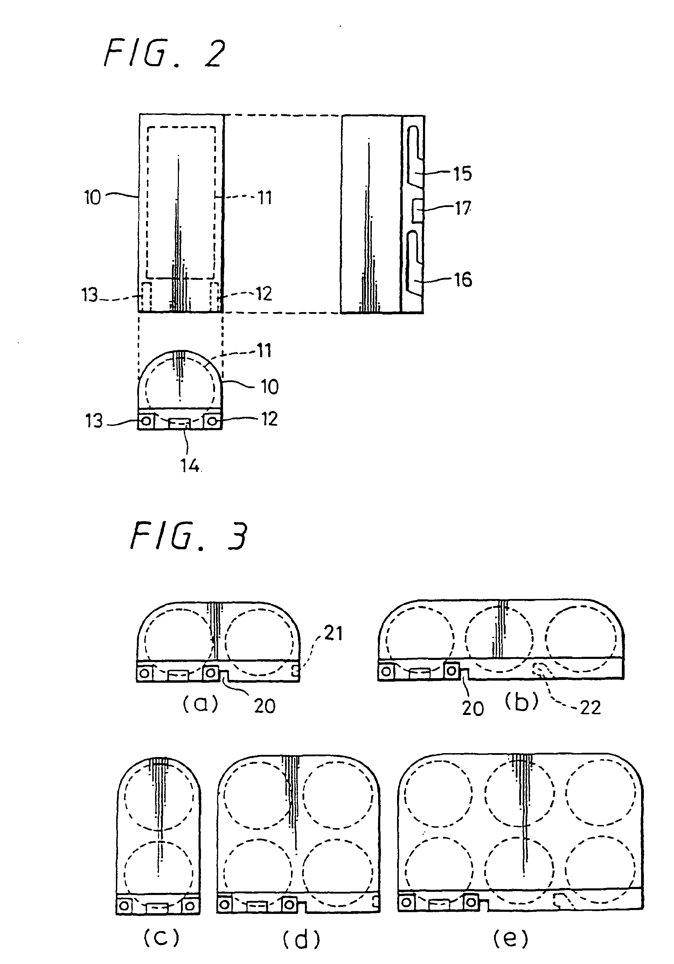

An embodiment of the present invention will be described below in detail. FIG. 2 is a block diagram showing the structure of a battery pack to which the present invention is applied. With the structure shown in FIG. 2, the battery pack has one built-in battery cell acting as a minimum unit. Some recent electronic equipments can be operated at a voltage of one battery cell, for example, at a voltage of 1.2 to 3.6 V, for example. Accordingly, the battery pack including one cell has a minimum structure correspondingly.

A battery cell 11 is built in a battery pack 10. Positive and negative electrode terminals 12 and 13 for deriving the power of the cell and a communication terminal 14 for detecting the residual charging amount of cell are provided on one of side faces in a longitudinal direction. The positive electrode and negative electrode terminals 12 and 13 are hollow and cylindrical electrodes. The distance between central axes of the cylinders of both the electrodes is set smaller than the width (diameter) of the battery cell 11. The communication terminal 14 is a plate-shaped electrode, and an optional number of terminals having other functions may further be provided.

Concave portions 15 and 16 acting as engaging means for engaging the battery pack with the charger or the electronic equipment are provided in the vicinity of the bottom of both the side faces in the width direction (faces which are in contact with the charger or the electronic apparatus). Four concave portions 15 and 16 are engaged with clicks acting as the engaging means of the charger or the electronic equipment which will be described later on, thereby fixing the battery pack to the charger or the electronic equipment. A dent 17 is provided at such a position as to correspond to the projection of the charger or the electronic equipment. Consequently, only the battery pack having the dent at the corresponding position can be fixed to the charger or the electronic equipment.

FIG. 3a to FIG. 3e are block diagram showing the structure of other battery packs to which the present invention is applied. FIG. 3 (a) is a side view showing the structure of a battery pack having two battery cells built therein. A channel 20 for positioning, when the battery pack is loaded on a charger or an electronic equipment, is provided on the bottom of the pack. The channel 20 is engaged with a band-shaped projections provided on the charger or the electronic equipment which will be described later on so that it can be loaded on a predetermined position. A concave portion which is or is not engaged with the click of the charger or the electronic equipment is provided in the middle of the channel 20. A concave portion 21 similar to the example of FIG. 2 is provided in the vicinity of the bottom of both side faces of the pack in the width direction.

FIG. 3 (b) is a side view showing the structure of a battery pack having three battery cells built therein. In the same manner as in (a), a channel 20 for positioning, when the battery pack is loaded on the charger or the electronic equipment, is provided on the bottom of the pack. A concave portion 22 to be engaged with the click of the charger or the electronic equipment is provided on the bottom between a central cell and a right cell, and no concave portion is provided on the right side face in the width direction.

FIGS. 3 (c), (d) and (e) show examples in which two battery cells shown in FIGS. 2, 3 (a) and 3 (b) are overlapped in the height direction to obtain a high capacity. Respective bottom shapes thereof are almost the same as in the pack in which the cell is a single layer.

FIG. 4 (a) is a front view showing the structure of the face of a battery charger or an electronic equipment to which the battery pack is to be fixed according to the present invention and a sectional view along the dotted line portion. Clicks 31, 32 and 34 to 37 acting as engaging means for engaging with and holding the battery pack are provided on the face of an electronic equipment 30 to which the battery pack is to be fixed.

Pins 38 and 39 are terminals for coming in contact with the positive electrode and negative electrode terminals 12 and 13 of the battery pack to perform charging or discharging, and are provided at positions corresponding to the terminal positions of the pack for one cell. In the case of the charger, a pin cover 40 for usually covering the pins 38 and 39 and for receding into the equipment 30 when the pack is to be fixed is provided in order to prevent the short circuiting. In addition, another pin for coming in contact with the communication terminal 14 of the pack is also provided.

FIG. 4 (b) is a side view showing the structure in which the battery pack having one cell built therein is fixed to an equipment. In a case where the pack 10 is to be fixed, the concave portions 15 and 16 provided on both side faces of the pack 10 in the width direction (side and bottom faces may be all right in case of two or more cells) and the clicks 31, 32, 34 and 35 provided on the face of the electronic equipment to which the battery pack is to be fixed are first aligned in position, the bottom of the pack 10 is caused to come in contact with the face of the electronic equipment to which the battery pack is to be fixed, the pack 10 is then moved upward to engage and fix the clicks and the concave portions each other, and the terminals 12 and 13 of the pack are connected to the pins 38 and 39 of the equipment. A dotted line 42 in FIG. 4 (b) indicates a position at which the pack having two cells built therein is fixed, and further extends to the left side and protrudes from the equipment in case of the pack having three cells built therein.

The clicks 31 and 32 are provided on a right side projection 41 on the fixing face, and are engaged with all the battery packs. The clicks 34 and 35 provided on a central band- shaped projection 33 act for the engagement with a battery pack having at least one cell. Since the battery pack having two or more cells provided in the width direction is engaged with the left clicks 36 and 37, it may or may not be engaged with the clicks 34 and 35 provided on the central band-shaped projection 33.

In FIG. 4, a left side (shown by A in FIG. 4) and a lower side (B) on the fixing face for the battery pack have no projections but are opened. Accordingly, it is possible to fix a battery pack having an optional shape in which the optional number of battery cells are arranged in parallel or series. All the battery packs can be engaged and held with the right clicks 31 and 32 and the central clicks 34 and 35. In this case, the left clicks 36 and 37 are not required. However, a large pack can be stably held by using the left clicks 36 and 37.

While the embodiments of the present invention have been disclosed, the following variant according to the present invention may also be proposed. Although the example in which the two directions of the battery pack fixing face of the equipment are opened has been disclosed in the embodiment, it is also possible to suppose a structure in which three directions other than the projections having the pins provided thereon are opened, for example. In this case, the pack having three cells shown in FIG. 3 (b) built therein can also have a structure in which a terminal is provided on both sides of a central cell. It is also possible to suppose a structure in which only one of left and right sides or only a lower side is opened.

Furthermore, it is also possible to suppose a case in which a cover of the battery pack is provided, that is, a case in which the pack fixing portion of the equipment is a closed space. Also in this case, if there is a battery pack fixing plane capable of fixing a battery pack having at least two cells built in parallel, the present invention can be applied thereto as it is.

While the example in which the clicks are provided in three lines on the equipment side as the means for engaging the battery pack with the equipment, clicks may further be provided in four or more lines for engagement with both side faces of a pack having three or more cells built therein, for example. Furthermore, it is also possible to propose engaging means having a click provided on the pack side and a concave portion or hole provided on the equipment side.

As described above, the present invention has the effect that the terminal shape of each of the battery packs having different bottom shapes is unified to the terminal shape of the battery pack having a minimum unit structure and the battery pack having an optional bottom shape can be engaged with the equipment side, and therefore, battery packs having various shapes and capacities can be used in the electronic equipment.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

## Claims

1. A battery pack (10) having at least two battery cells (11)of the same width accommodated therein which is capable of being charged by a battery charger according to claim 2, the battery pack comprising:
a bottom region including a first electrode terminal (13) positioned near a side face of the battery pack and a second electrode terminal (13) positioned away from the side face of the battery pack, said first and second electrode terminals (13,12) being positive and negative terminal electrodes capable of electrically contacting the battery charger during charging;
a space between a center of the first electrode terminal (13) and a centre of the second electrode terminal (12) is less than the width of the battery cells (11) and wherein a communication terminal (14) for detecting the residual charging amount of the battery pack is provided in said space;
concave engaging portions capable of engaging the battery pack with the battery fixing plane of the battery charger; and
a channel (20/16) provided in the bottom region of the battery pack adjacent to the second electrode terminal (12) for properly positioning the battery pack in the battery charger.

2. A battery charger (30) comprising:
a battery pack fixing plane capable of fixing a battery pack (10) having at least two cells (11) of the same width built in parallel;
an engaging means (31, 32, 34, 35) for engaging a battery pack (10) having at least one cell (11) built therein with the battery pack fixing plane; and
a connecting means (38, 39) adapted for connection to positive electrode and negative electrode terminals (12, 13) of the battery pack (10)the connecting means being disposed to connect to positive electrode and negative electrode terminals (12,13) having centres separated by a space less than a width of one of the battery cells (11);
wherein at least one side of the battery pack fixing face is opened in the widthwise direction of said face.

3. An electronic equipment (30) using a battery pack (10) according to claim 1, comprising:
a battery pack fixing plane capable of fixing a battery pack (10) having at least two cells (11) of the same width built in parallel; battery pack (10) having
an engaging means (31, 32, 34, 35) for engaging a battery pack (10) having at least one cell (11) built therein with the battery pack fixing plane; and
a connecting means (38, 39) adapted for connection to positive electrode and negative electrode terminals (12, 13) of the battery pack (10), the connecting means being disposed to connect to positive electrode and negative electrode terminals (12,13) having centres separated by a space less than a width of one of the battery cells (11);
wherein at least one side of the battery pack fixing face is opened in the widthwise direction of said face.

## Patentansprüche

1. Batteriepackung (10), in der zumindest zwei Batteriezellen (11) derselben Breite aufgenommen sind und die durch eine Batterie-Ladevorrichtung nach Anspruch 2 geladen werden kann, umfassend:
einen Bodenbereich, der einen ersten Elektrodenanschluss (13) enthält, welcher nahe einer Seitenfläche der Batteriepackung positioniert ist, und einen zweiten Elektrodenanschluss (12), der von der Seitenfläche der Batteriepackung entfernt positioniert ist, wobei die ersten und zweiten Elektrodenanschlüsse (13, 12) positive bzw. negative Anschlusselektroden sind, die imstande sind, die Batterie-Ladevorrichtung während des Ladens elektrisch zu berühren;
einen zwischen einer Mitte des ersten Elektrodenanschlusses (13) und einer Mitte des zweiten Elektrodenanschlusses (12) vorgesehenen Zwischenraum, der kleiner ist als die Breite der Batteriezellen (11), wobei ein Kommunikationsanschluss (14) zur Ermittlung der Restladungsmenge der Batteriepackung in dem Zwischenraum vorgesehen ist;
konkave Eingriffbereiche, die imstande sind, die Batteriepackung mit der Batterie-Befestigungs- bzw. -Fixierungsebene der Batterie-Ladevorrichtung in Eingriff zu bringen;
und eine in dem Bodenbereich der Batteriepackung neben dem zweiten Elektrodenanschluss (12) vorgesehene Aussparung (20/16) für eine richtige Positionierung der Batteriepackung in der Batterie-Ladevorrichtung.

2. Batterie-Ladevorrichtung (30), umfassend:
eine Batteriepackungs-Befestigungs- bzw. -Fixierungsebene, die imstande ist, eine Batteriepackung (10) zu befestigen bzw. zu fixieren, in der zumindest zwei Zellen (11) derselben Breite parallel eingebaut sind;
eine Eingriffeinrichtung (31, 32, 34, 35) für ein Eingreifen einer Batteriepackung (10), in der zumindest eine Zelle (11) eingebaut ist, in der Batteriepackungs-Befestigungs- bzw. -Fixierungsebene;
und eine Verbindungseinrichtung (38, 39), die für eine Verbindung mit den positiven und negativen Elektrodenanschlüssen (12, 13) der Batteriepackung (10) geeignet ist, wobei die Verbindungseinrichtung angeordnet ist, um die positiven und negativen Elektrodenanschlüsse (12, 13) zu verbinden, welche Mitten aufweisen, die durch einen Zwischenraum getrennt sind, der kleiner ist als eine Breite einer der Batteriezellen (11);
wobei zumindest eine Seite der Batteriepackungs-Befestigungs- bzw. - Fixierungsfläche in Richtung der Breite der Fläche geöffnet ist.

3. Elektronisches Gerät (30), welches eine Batteriepackung (10) nach Anspruch 1 verwendet, umfassend:
eine Batteriepackungs-Befestigungs- bzw. -Fixierungsebene, die eine Batteriepackung (10) zu befestigen bzw. zu fixieren gestattet, in der zumindest zwei Zellen (11) derselben Breite parallel eingebaut sind;
eine Eingriffeinrichtung (31, 32, 34, 35) für ein Eingreifen einer Batteriepackung (10), in der zumindest eine Zelle (11) eingebaut ist, in der Batteriepackungs-Befestigungs- bzw. -Fixierungsebene;
und eine Verbindungseinrichtung (38, 39), die geeignet ist für eine Verbindung mit den positiven und negativen Elektrodenanschlüssen (12, 13) der Batteriepackung (10), wobei die Verbindungseinrichtung angeordnet ist, um die positiven und negativen Elektrodenanschlüsse (12, 13) zu verbinden, die Mitten aufweisen, welche durch einen Zwischenraum getrennt sind, der kleiner ist als die Breite einer der Batteriezellen (11); wobei zumindest eine Seite der Batteriepackungs-Befestigungs- bzw. - Fixierungsfläche in Richtung der Breite der betreffenden Fläche geöffnet ist.

## Revendications

1. Bloc de batterie (10) possédant au moins deux cellules de batterie (11) de même largeur disposées à l'intérieur, qui peut être chargé par un chargeur de batterie selon la revendication 2, le bloc de batterie comportant :
une région inférieure comportant une première borne d'électrode (13) positionnée près d'une surface latérale du bloc de batterie et une seconde borne d'électrode (12) positionnée éloignée de la surface latérale du bloc de batterie, lesdites première et seconde bornes d'électrode (13, 12) étant des électrodes de bornes positive et négative pouvant être en contact électrique du chargeur de batterie pendant la charge ;
un espace entre un centre de la première borne d'électrode (13) et un centre de la seconde borne d'électrode (12) est inférieur à la largeur des cellules de batterie (11) et dans lequel une borne de communication (14) pour détecter la quantité de charge résiduelle du bloc de batterie est prévue dans ledit espace ;
des parties d'engagement concaves pouvant venir en prise avec le bloc de batterie dans le plan de fixation de batterie du chargeur de batterie ; et
un canal (20/16) prévu dans la région inférieure du bloc de batterie adjacent à la seconde borne d'électrode (12) pour positionner de façon correcte le bloc de batterie dans le chargeur de batterie.

2. Chargeur de batterie (30) comportant :
un plan de fixation de bloc de batterie pouvant fixer un bloc de batterie (10) comportant au moins deux cellules (11) de même largeur montées en parallèle ;
un moyen d'engagement (31, 32, 34, 35) pour venir en prise avec un bloc de batterie (10) possédant au moins une cellule (11) montée à l'intérieur dans le plan de fixation de bloc de batterie ; et
un moyen de connexion (38, 39) adapté pour une connexion aux bornes d'électrode positive et d'électrode négative (12, 13) du bloc de batterie (10), le moyen de connexion étant disposé pour se connecter aux bornes d'électrode positive et d'électrode négative (12, 13) possédant des centres séparés par un espace inférieur à une largeur de l'une des cellules de batterie (11) ;
dans lequel au moins un côté de la surface de fixation de bloc de batterie est ouvert dans la direction de la largeur de ladite surface.

3. Équipement électronique (30) utilisant un bloc de batterie (10) selon la revendication 1, comportant :
un plan de fixation de bloc de batterie pouvant fixer un bloc de batterie (10) possédant au moins deux cellules (11) de même largeur montées en parallèle ;
un moyen d'engagement (31, 32, 34, 35) pour venir en prise avec un bloc de batterie (10) possédant au moins une cellule (11) montée à l'intérieur dans le plan de fixation de bloc de batterie ; et
un moyen de connexion (38, 39) adapté pour une connexion aux bornes d'électrode positive et d'électrode négative (12, 13) du bloc de batterie (10), le moyen de connexion étant disposé pour se connecter aux bornes d'électrode positive et d'électrode négative (12, 13) présentant des centres séparés par un espace inférieur à une largeur de l'une des cellules de batterie (11) ;
dans lequel au moins un côté du plan de fixation de bloc de batterie est ouvert dans la direction de la largeur de ladite surface.
